# EUROPEAN PATENT APPLICATION

(11) **EP 2 897 096 A1**
(43) Date of publication of application: **22.07.2015**
(21) Application number: 13837625.6
(22) Date of filing: 11.07.2013
(51) Int. Cl.: G06Q 30/02, G06Q 50/10

(54) **APPARATUS AND METHOD FOR PROVIDING VARIABLE CONTENT BY USING COUPONS**

(30) Priority: 13.09.2012 KR 20120101337
(71) Applicant: Baek, Seung-Cheol, Incheon 405-785 (KR); Lee, Kee-Pum, Gyeonggi-do 445-897 (KR)
(72) Inventor: Baek, Seung-Cheol, Incheon 405-785 (KR); Lee, Kee-Pum, Gyeonggi-do 445-897 (KR)
(74) Representative: Verscht, Thomas Kurt Albert
(86) International application number: PCT/KR2013/006186
(87) International publication number: WO 2014/042346

(57) **Abstract**

The present invention relates to an apparatus and method for providing variable content using coupons, wherein a free gift is provided in accordance with a winning coupon and contents having stories or results that are different from each other are provided about an identical content in accordance with the winning number and coupon number recorded on the coupon, thereby enabling the extension of the range of coupon use. As a result, the present invention provides the effect of giving a content user continuous enjoyment despite being provided identical content several times due to the fact that the contents provided have varied stories or results in accordance with new winning schemes for coupons with respect to the identical content.

## Description

### [Technical Field]

The present invention relates to a content providing device, and more particularly, to a variable content providing device and method using a coupon, which provides contents having stories and results different from each other with respect to the same content according to a coupon number recorded on a coupon and provides a gift according to coupon winning.

### [Background Art]

Recently, according to sudden increasing of on-line culture at a high speed, various contents such as comics, flash animation, sports movies, drama movies, advertisement movies, and film movies are provided. Ordinarily, a content user pays a predetermined fee and watches an arbitrary content in streaming, or downloads a content on line and watches the content off line through a portable terminal.

Generally, one content has one story or one result, ordinarily a content user does not watch the content twice or more since the user knows the story or the result once the user watches the content. That is, once the user watches the content, the user does not watch the content any more since it has a bellyful, and thus the content user purchases and watches another content having a new story or a new result.

As a kind of marketing, coupon marketing that includes advertisement about a product for advertisement of the product and provides a discount of the product or a gift is widely applied. Herein, the gift means providing people who purchase any product for a predetermined period with the other or the same product free or at a low price. Such coupon marketing uses an unconditional providing manner of including site information of providing a gift, induces an access to the web site, showing advertisement or the like to the accessed coupon user, receiving and registering a coupon number recorded on the coupon from the coupon user, and then providing a gift, and a winning manner of providing a gift only when the input coupon number is a winning coupon number.

As described above, in the conventional coupon, there is a problem that the use thereof is limited only for gift providing and advertisement.

In addition, the conventional contents have one story or result, and there is a problem that a user has to satisfy with one watching. Particularly, since a content is advertisement having one story when the content is advertisement, it has a bellyful, the user does not watch the content, efficiency of advertisement may be lowered as a problem, most is provided for a fee, and the user has monetarily a burden, which is a problem.

Accordingly, a plan to provide a content which is not easily tired using a coupon while raising utilization of the coupon is required.

### [Summary of Invention]

### [Technical Problem]

Accordingly, an object of the invention is to provide a variable content providing device and method using a coupon, which provides contents different from each other according to a coupon number recorded on a coupon.

Another object of the invention is to provide a variable content providing device and method using a coupon, which provides contents and can provide a gift according to winning.

### [Solution to Problem]

A variable content providing device using a coupon according to the invention to achieve the object described above, includes: instant coupon number acquiring means for acquiring an instant coupon number of a coupon on which the instant coupon number is printed; a content DB that stores a plurality of sub-contents according to superiority and inferiority of numbers; a control unit that includes winning number acquiring means for acquiring a winning number, coupon number acquiring means for acquiring a coupon number from the instant coupon number input through the instant coupon number acquiring means, and content configuring means for determining superiority and inferiority among numerals of the coupon number on the basis of the winning number, loading and coupling sub-contents corresponding to the superiority and inferiority of the numerals from the content DB, and then configuring and outputting a content; and a display unit that displays the content; wherein the content configuring means includes a subject detecting unit that receives a coupon number detected through the coupon number acquiring means, and detects one of numbers of the coupon number, as a subject number, a superiority and inferiority processing unit that receives a winning number acquired through the winning number acquiring means, determines superiority and inferiority among supporting numbers except for the subject number in the subject number and the coupon number on the basis of the winning number, outputs superiority and inferiority information between the subject number and the supporting numbers, and outputs an entire superiority signal when the subject number is superior to all the supporting numbers, an entire coincidence determining unit that receives a winning number from the winning number acquiring means when the entire superiority signal is input from the superiority and inferiority processing unit, receives a coupon number from the coupon number acquiring means, performs entire coincidence determination of checking whether numerals constituting the winning number are the same as numerals constituting the coupon number and determining whether ciphers thereof are the same, outputs an entire coincidence signal in case of entire coincidence, and outputs a numeral coincidence signal when the ciphers do not coincide and only the numerals are the same, and a content configuring unit that couples sub-contents corresponding to the numeral coincidence signal and the entire coincidence signal input from the entire coincidence determining unit and the entire superiority signal and superiority and inferiority input from the superiority and inferiority processing unit, and configures a content.

The device further includes a gift providing unit that provides the coupon user with a gift according to ranking, and the control unit determines ranking according to superiority and inferiority of the numerals, and provides a gift corresponding to the ranking through the gift providing unit.

The gift providing unit is a printing device that prints one of a discount ticket, an advance ticket, and a tasting ticket about an arbitrary prize corresponding to the ranking.

The gift providing unit is a prize discharge device that discharges an arbitrary prize prepared in advance according to the ranking.

The prize is one of a discount ticket, an advance ticket, a tasting ticket, and an object.

The instant coupon number acquiring means is a coupon scanning unit that scans a coupon, and scans and outputs an instant coupon number printed on the coupon.

The instant coupon number acquiring means is a key input unit that includes text keys including a plurality of number keys capable of inputting an instant coupon number, and receives an instant coupon number by pressing the number keys corresponding to the instant coupon number in cooperation with the display unit.

The superiority and inferiority processing unit determines whether, as for a subject number, there is a coinciding number in numbers of the winning number, and determines numbers of supporting numbers as entire superiority when the subject number coincides with one number of numbers of the winning number.

The superiority and inferiority processing unit determines that, as for a subject number, there is no coinciding number in the winning number, a subject number is superior with respect to a number coinciding with numbers of the winning number in the supporting numbers, and the supporting number which is not a number of the winning number is inferior.

A variable content providing method using a coupon according to the invention to achieve the object described above, includes: an instant coupon number acquiring process of acquiring, by instant coupon number acquiring means of a control unit, an instant coupon number from a coupon; a coupon number acquiring process of, acquiring, by coupon number acquiring means of the control unit, a coupon number from the instant coupon number; a winning number acquiring process of acquiring, by winning number acquiring means of the control unit, a winning number; a content configuring process of determining, by content configuring means of the control unit, superiority and inferiority among numerals of the coupon number on the basis of the winning number, and coupling sub-contents corresponding to the superiority and inferiority and a cipher coincidence degree, configure a content; a content display process of displaying, by the control unit, the configured content; wherein the content configuring process includes a subject detecting step of receiving, by a subject detecting unit, a coupon number detected through the coupon number acquiring means, and detecting one of numbers of the coupon number, as a subject number, a superiority and inferiority processing step of receiving, by a superiority and inferiority processing unit, a winning number acquired through the winning number acquiring means, determining superiority and inferiority among supporting numbers except for the subject number in the subject number and the coupon number on the basis of the winning number, outputting superiority and inferiority information between the subject number and the supporting numbers, and outputting an entire superiority signal when the subject number is superior to all the supporting numbers, an entire coincidence determining step of receiving, by an entire coincidence determining unit, a winning number from the winning number acquiring means when the entire superiority signal is input, receiving a coupon number from the coupon number acquiring means, performing entire coincidence determination of checking whether numerals constituting the winning number are the same as numerals constituting the coupon number and determining whether ciphers thereof are the same, outputting an entire coincidence signal in case of entire coincidence, and outputting a numeral coincidence signal when the ciphers do not coincide and only the numerals are the same, and a content configuring step of coupling, by a content configuring unit, sub-contents corresponding to the numeral coincidence signal and the entire coincidence signal input from the entire coincidence determining unit and the entire superiority signal and superiority and inferiority input from the superiority and inferiority processing unit, and configuring a content.

The instant coupon number acquiring process includes a coupon insertion determining step of checking whether a coupon is inserted through a coupon scanning unit; and an instant coupon number detecting step of scanning the inserted coupon and detecting an instant coupon number when it is determined that the coupon is inserted.

The method further includes a gift providing process of determining ranking corresponding to the superiority and inferiority information and a cipher coincidence degree, and providing a gift corresponding to the determined ranking to a coupon user using the coupon.

In the superiority and inferiority processing step, the superiority and inferiority processing unit determines whether, as for a subject number, there is a coinciding number in numbers of the winning number, and determines numbers of supporting numbers as entire superiority when the subject number coincides with one number of numbers of the winning number.

In the superiority and inferiority processing step, the superiority and inferiority processing unit determines that, as for a subject number, there is no coinciding number in the winning number, a subject number is superior with respect to a number coinciding with numbers of the winning number in the supporting numbers, and the supporting number which is not a number of the winning number is inferior.

### [Advantageous Effects of Invention]

The invention has an advantage capable of expand an application range of a coupon by providing a content using a coupon.

In addition, the invention has an advantage capable of giving continuous fun even when providing the same content many times to a content user using a content by providing a content having a variable story or result according to a new winning determination method of a coupon with respect to the same content.

In addition, the invention has an advantage capable of activating usability of a coupon and use of a content since a content user may not pay a use fee in using a content and thus a monetary burden is not given to the user.

### [Brief Description of Drawings]

[Figure 1] Figure 1 is a diagram illustrating a configuration of a variable content providing device using a coupon according to a first embodiment of the invention.
[Figure 2] Figure 2 is a diagram illustrating a configuration of a variable content providing device using a coupon according to a second embodiment of the invention.
[Figure 3] Figure 3 is a flowchart illustrating a variable content providing method using a coupon according to the invention.

### [Description of Embodiments]

Hereinafter, a configuration of the invention will be described in detail with reference to embodiments of the invention configuration shown in the accompanying drawings.

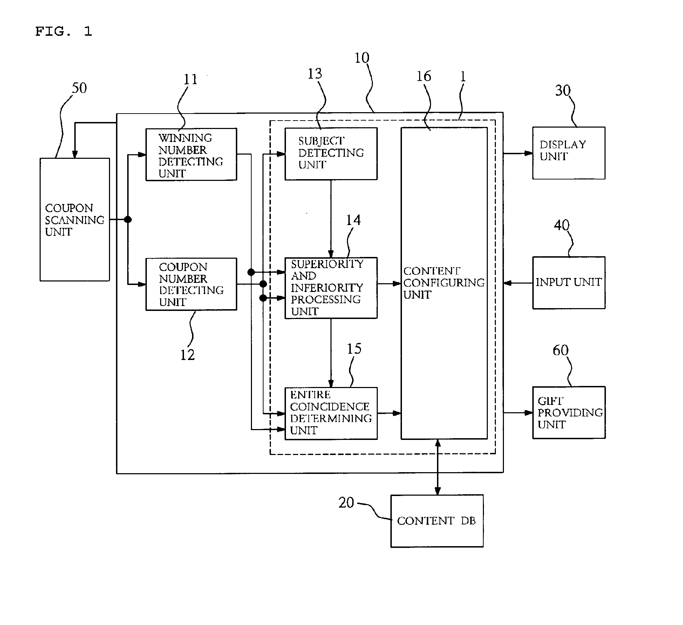

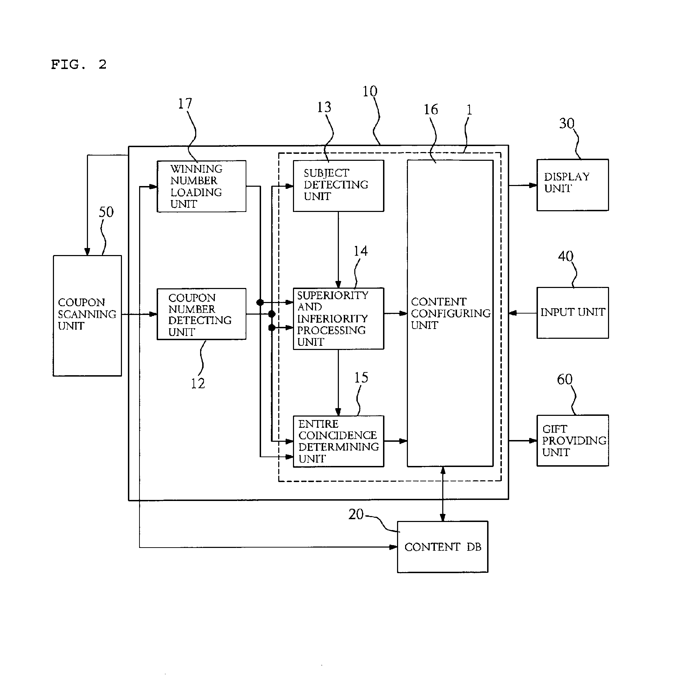

Figure 1 is a diagram illustrating a configuration of a variable content providing device using a coupon according to a first embodiment of the invention, and Figure 2 is a diagram illustrating a configuration of a variable content providing device using a coupon according to a second embodiment of the invention. Hereinafter, embodiments will be described with reference to Figure 1 and Figure 2.

First, before describing a configuration of a variable content providing device using a coupon according to the invention, on a coupon applied to the invention, an instant coupon number including a coupon number and a winning number or a winning confirmation number in which a coupon number and a winning number are encrypted may be printed by numerals, bar codes, QR codes, or the like, and only a coupon number may be printed as an instant coupon number, according to the embodiments of the invention.

A variable content providing device using a coupon according to the invention includes a control unit 10, a content DB 20, a display unit 30, an input unit 40, a coupon scanning unit 50, and a gift providing unit 60.

The control unit 10 controls an overall operation of the variable content providing device using a coupon according to the invention.

The content DB 20 stores at least one content including sub-contents having a plurality of stories or results. The contents may be various fields of, for example, comics, flash animations, sports, and dramas. Specifically, for example, the contents may be soccer movies between Korea and other countries (England, France, Japan, Spain, etc.), and the sub-contents of the contents may be movies of the game between Korea and England, the game between Korea and France, the game between Korea and Japan, the game between Korea and Spain, the game between England and France, the game between England and Japan, the game between England and Spain, the game between France and Japan, the game between France and Spain, and the game between Japan and Spain. In addition, each game may include movies of won or lost games, for example, movies in which Korea won and England won in the game between Korea and England. As another example, when the content is a chocolate advertisement movie, the sub-content may be an omnibus chocolate advertisement movie. Such contents may be stored in advance in the content DB 20 of the variable content providing device of the invention, may be downloaded from a remote content providing server (not shown) and stored in the content DB 20, and may be periodically or randomly updated.

The display unit 30 displays an arbitrary content stored in the content DB 20 by the control of the control unit 10, or displays graphic interface means and information according to an operation of the variable content providing device of the invention. The display unit 30 may be a touch screen integrated with a touch pad that outputs coordinate data of a touched part to the control unit 10.

The input unit 40 includes a plurality of number keys, keys for inputting characters, keys for setting functions, and arrow keys for moving forward, backward, left, and right a cursor for selecting data, and outputs data for pressed key to the control unit 10.

When the display unit 30 is configured by the touch screen, the display unit 30 and the input unit 40 may be used as instant coupon number input means capable of inputting an instant coupon number of a coupon.

The coupon scanning unit 50 as instant coupon number input means scans a coupon, which is located at a specific position or is inserted, detects an instant coupon number from a coupon, and outputs it to the control unit 10. The coupon scanning unit 50 may be a scanning device that recognizes numerals printed on a coupon as texts, and may be a QR code scanning device that scans bar codes or/and QR codes.

The gift providing unit 60 provides a gift corresponding to winning ranking of a coupon number to a coupon user. The gift may be a paper gift such as a discount ticket and an entrance ticket, and may be a mobile gift in which a discount ticket, an entrance ticket, or the like is provided by a mobile message. In case of the latter, it is preferable that the gift providing unit 60 be a mobile communication unit capable of transmitting a mobile message through CDMA or LTE mobile communication network. However, a separate message server (not shown) may be provided, and a message may be transmitted by connecting to the message server through Internet. In addition, a separate gift providing server (not shown) may be provided, coupon user information including a name, an address, and the like of a coupon user according to winning may be transmitted to the gift providing server, and an actual gift set in advance as a gift may be delivered. The coupon user information may be input and received through the input unit 40 and the display unit 30. In addition, the gift may be an object prepared in the content providing device of the invention. In this case, the gift providing unit 60 may be object discharge means that discharges an object according to ranking (or randomly) prepared therein in advance.

Hereinafter, a detailed configuration and operation of the control unit 10 according to a first embodiment and a second embodiment of the invention will be described.

### (First Embodiment)

A control unit 10 includes a winning number detecting unit 11 that is winning number acquiring means, a coupon number detecting unit 12 that is coupon number acquiring means, and content configuring means 1.

The winning number detecting unit 11 detects and outputs a winning number from an instant coupon number input through the coupon scanning unit 50, the input unit 40, or the display unit 30.

The coupon number detecting unit 12 detects and outputs a coupon number from an instant coupon number input through the coupon scanning unit 50, the input unit 40, or the display unit 30.

The content configuring means 1 determines superiority and inferiority among numerals of the coupon number on the basis of the winning number, loads and then couples sub-contents corresponding to coincidence of numerals constituting the winning number and the coupon number and superiority and inferiority of the numerals from the content DB, and configures and outputs a content.

Specifically, the content configuring means 1 includes a subject detecting unit 13, a superiority and inferiority processing unit 14, an entire coincidence determining unit 15, and a content configuring unit 16.

The subject detecting unit 13 detects a subject number from the coupon number output from the coupon number detecting unit 12, and outputs the subject number to the superiority and inferiority processing unit 14.

The superiority and inferiority processing unit 14 receives the subject number from the subject detecting unit 13, receives the winning number from the winning number detecting unit 11, determines superiority and inferiority between the subject number of the coupon number and the other numbers (hereinafter, referred to as "supporting number"), then outputs superiority and inferiority information between the subject number and each supporting number to the content configuring unit 16, and outputs an entire superiority signal to the entire coincidence determining unit 15 and the content configuring unit 16 when the subject number is superior to all the supporting numbers.

When the entire superiority signal is input from the superiority and inferiority processing unit 14, the entire coincidence determining unit 15 compares the winning number input from the winning number detecting unit 11 with the coupon number input from the coupon number detecting unit 12 while determining whether to coincide even with ciphers, and then outputs an entire coincidence signal or a numeral coincidence signal to the content configuring unit 16 according to the determination result.

The content configuring unit 16 loads the sub-contents from the content DB 20, configures a content according to the superiority and inferiority information input from the superiority and inferiority processing unit 14 and according to whether to input the entire coincidence signal, the numeral coincidence signal, and the entire superiority signal from the entire coincidence determining unit 15, and displays the configured content through the display unit 30.

For example, when the winning number is "1456" and the coupon number "2789", the subject number of the coupon number is "2" and the supporting numbers are "7", "8", and "9".

When the coupon number "2789" is input, the subject number detecting unit 13 senses that the subject number is "2", detects "2" as the subject number, and outputs the subject number to the superiority and inferiority processing unit 14.

According to the embodiments of the invention, whether the subject number is in the winning number may affect the determination of superiority and inferiority, and the superiority and inferiority may be determined irrespective of whether or not the subject number is in the winning number.

First, describing the case where the subject number affects the determination of superiority and inferiority, the superiority and inferiority processing unit 14, first, determines whether the subject number "2" is in the winning number "1456". However, the subject number "2" of the example described above is not in the winning number. It is determined whether the first supporting number "7" is in the winning number "1456". However, since the first supporting number "7" is not even in the winning number, both of the subject number "2" and the supporting number "7" are not in the winning number "1456", and thus the subject number "2" is determined as 'inferiority' with respect to the supporting number "7". Since the second supporting number "8" and the third supporting number "9" are not even in the winning number, the subject number "2" is determined as 'inferiority' even with respect to the second and third supporting numbers. Accordingly, the superiority and inferiority processing unit 14 provides superiority and inferiority information of "inferior, inferior, and inferior" to the content configuring unit 16.

As another example, describing a case where the winning number is the same as that of the first example and the coupon number is "2489" by way of example, the first supporting number "4" is in the winning number "1456", thus the superiority and inferiority information of the subject number "2" is 'superiority (or superior)' with respect to the first supporting number, and the superiority and inferiority information is 'inferiority (or inferior)' with respect to the other supporting numbers "8" and "9" similarly to the first example. Accordingly, the in the second example, the superiority and inferiority processing unit 14 outputs information of "superior, inferior, and inferior" as the superiority and inferiority information to the content configuring unit 16.

As the third example, a case where the winning number is the same and the coupon number is "4156" will be described by way of example.

In this case, the subject number is also "4" and a number included in the winning number, and the first to third supporting numbers "1", "5", and "6" are numbers included in the winning number. Accordingly, since the subject number "4" is superiority with respect to all the supporting numbers, the superiority and inferiority information is "superior, superior, and superior". Therefore, the superiority and inferiority processing unit 14 outputs "superior, superior, and superior" as the superiority and inferiority information to the content configuring unit 16, and outputs the entire superiority signal to the entire coincidence determining unit 15.

Then, the entire coincidence determining unit 15 determines whether ciphers between the winning number "1456" and the coupon number "4156" coincide with each other. However, since all the ciphers are different from each other, the entire coincidence determining unit 15 outputs the entire superiority signal to the content configuring unit 16. Accordingly, the content configuring unit 16 configures a content corresponding to the superiority and inferiority information of "superior, superior, and superior".

As the fourth example, if the coupon number is also "1456" equal to the winning number, the entire coincidence determining unit 15 outputs the entire coincidence signal to the content configuring unit 16, and the content configuring unit 16 configures a content corresponding to the superiority and inferiority information based on the entire coincidence, and displays the content through the display unit 30.

As the fifth example, a case where the winning number is the same and the coupon number "4237" will be described by way of example.

In this case, the subject number is "4" and a number included in the winning number, and the first to third supporting numbers "2", "3", and "7" are numbers which are not included in the winning number. Accordingly, the subject number "4" is determined as superiority with respect to all the supporting numbers "2", "3", and "7".

On the contrary, when the subject number does not affect the determination of superiority and inferiority, the subject number "4" in the fifth example is determined as inferiority with respect to the supporting numbers "2", "3", and "7".

It is assumed that the contents are soccer movies, No. 1 is England, No. 2 is Japan, No. 3 is Spain, No. 4 is Korea, No. 5 is USA, No. 6 is France, No. 7 is Portugal, No. 8 is Australia, and No. 9 is Saudi, and the embodiment will be described yet again.

In the first example, since the coupon number is "2789", the contents include a movie in which Japan (No. 2) as a subject lost the soccer game with No. 7 Portugal, a movie of losing the soccer game with No. 8 Australia, and a movie of losing the soccer game with No. 9 Saudi.

In the third example, since the coupon number is "4156", the contents include a movie in which Korea corresponding to the subject number "4" won the soccer game with No. 1 England as the first supporting number, a movie of winning the soccer game with No. 5 USA, and a movie of winning the soccer game with No. 6 France.

### (Second Embodiment)

A control unit 10 includes a coupon number detecting unit 12, a winning number loading unit 17, a subject detecting unit 13, a superiority and inferiority processing unit 14, an entire coincidence determining unit 15, and a content configuring unit 16.

In the second embodiment, a winning number is stored in advance in a content DB 20 of a variable content providing device of the invention. The winning number may be registered by a manager, and may be periodically updated through a gift providing server, a winning number managing server (not shown), or the like connected through Internet.

Accordingly, as for the control unit 10 of the second embodiment, the winning number loading unit 17 for loading a winning number from the content DB 20 is configured instead of the winning number detecting unit 11.

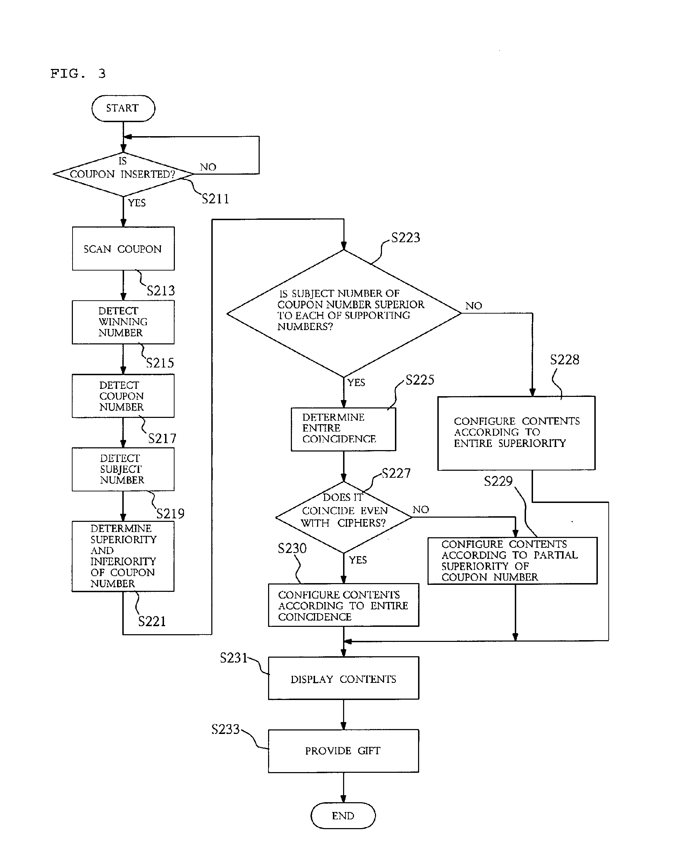

Figure 3 is a flowchart illustrating a variable content providing method using a coupon according to the first embodiment of the invention.

Referring to Figure 3, first, the control unit 10 checks whether a coupon is inserted through the coupon scanning unit 50 (S211).

When the coupon is inserted, the control unit 10 drives the coupon scanning unit 50 to scan the coupon (S213). In this case, the coupon scanning unit 50 scans the coupon, analyzes a scanned image including an instant coupon number, and outputs the instant coupon number to the control unit 10.

Then, the control unit 10 detects a winning number and a coupon number from the instant coupon number through the winning number detecting unit 11 and the coupon number detecting unit 12 (S215 and S217). However, the instant coupon number may be input through the input unit 40 and the display unit 30.

When the coupon number and the winning number are detected, the control unit 10 detects a subject number of the coupon number through the subject detecting unit 13 (S219). The subject number may be the first number of the coupon number as described above.

When the subject number is extracted, the control unit 10 determines superiority and inferiority between the subject number and the supporting numbers on the basis of the winning number through the superiority and inferiority processing unit 14, and generates superiority and inferiority information (S221).

When the superiority and inferiority are determined, the control unit 10 determines whether the subject number is superiority (referred to as "partial superiority") with respect to a part of the supporting numbers or superiority (referred to as "entire superiority") with respect to all the supporting numbers (S223).

In case of partial superiority, the control unit 10 configures a content according to the superiority and inferiority information with respect to the partial superiority through the content configuring unit 16 (S228).

However, when the subject number is the entire superiority with respect to the supporting numbers, the control unit 10 determines whether the subject number coincides with the winning number by numerals and ciphers through the entire coincidence determining unit 15 (S225 and S227).

As a determination result, when the ciphers of the winning number and the coupon number are not the same number, and the numerals of the winning number and the coupon number are configured with only the same numerals, the control unit 10 configures a content according to the entire superiority through the content configuring unit 16 (S229).

Meanwhile, the numerals constituting the coupon number and the winning number are the same and the ciphers of the numerals are even the same, the control unit 10 configures a content according to the entire coincidence through the content configuring unit (S230).

The configured content is displayed on the display unit 30 by the control unit 10 (S231).

After displaying the content, the control unit 10 provides a gift for the inserted coupon to the coupon user through the gift providing unit 60 according to the winning ranking (S233). The winning ranking is determined by the superiority and inferiority information. For example, a case of entire coincidence may be the first rank, a case of entire superiority may be the second rank, and subsequently, the ranking may be determined according to the number of times of superiority.

Meanwhile, the invention is not limited to only the typical preferred embodiments described above, and those who skilled in the art can easily understand that the invention may be variously improved, modified, replaced, or added within the scope which does not deviate from the gist of the invention. When such embodiments by improvement, modification, replacement, or addition belongs to the scope of the following accompanying Claims, it should be considered that the technical spirit thereof also belongs to the invention.

### [Reference Signs List]

- 10:: CONTROL UNIT
- 11:: WINNING NUMBER DETECTING UNIT
- 12:: COUPON NUMBER DETECTING UNIT
- 13:: SUBJECT DETECTING UNIT
- 14:: SUPERIORITY AND INFERIORITY PROCESSING UNIT
- 15:: ENTIRE COINCIDENCE DETERMINING UNIT
- 16:: CONTENT CONFIGURING UNIT
- 17:: WINNING NUMBER LOADING UNIT
- 20:: CONTENT DB
- 30:: DISPLAY UNIT
- 40:: INPUT UNIT
- 50:: COUPON SCANNING UNIT
- 60:: GIFT PROVIDING UNIT

## Claims

1. A variable content providing device using a coupon comprising:
instant coupon number acquiring means for acquiring an instant coupon number of a coupon on which the instant coupon number is printed;
a content DB that stores a plurality of sub-contents according to superiority and inferiority of numbers;
a control unit that includes winning number acquiring means for acquiring a winning number, coupon number acquiring means for acquiring a coupon number from the instant coupon number input through the instant coupon number acquiring means, and content configuring means for determining superiority and inferiority among numerals of the coupon number on the basis of the winning number, loading and coupling sub-contents corresponding to the superiority and inferiority of the numerals from the content DB, and then configuring and outputting a content; and
a display unit that displays the content;
wherein the content configuring means includes
a subject detecting unit that receives a coupon number detected through the coupon number acquiring means, and detects one of numbers of the coupon number, as a subject number,
a superiority and inferiority processing unit that receives a winning number acquired through the winning number acquiring means, determines superiority and inferiority among supporting numbers except for the subject number in the subject number and the coupon number on the basis of the winning number, outputs superiority and inferiority information between the subject number and the supporting numbers, and outputs an entire superiority signal when the subject number is superior to all the supporting numbers,
an entire coincidence determining unit that receives a winning number from the winning number acquiring means when the entire superiority signal is input from the superiority and inferiority processing unit, receives a coupon number from the coupon number acquiring means, performs entire coincidence determination of checking whether numerals constituting the winning number are the same as numerals constituting the coupon number and determining whether ciphers thereof are the same, outputs an entire coincidence signal in case of entire coincidence, and outputs a numeral coincidence signal when the ciphers do not coincide and only the numerals are the same, and
a content configuring unit that couples sub-contents corresponding to the numeral coincidence signal and the entire coincidence signal input from the entire coincidence determining unit and the entire superiority signal and superiority and inferiority input from the superiority and inferiority processing unit, and configures a content.

2. The variable content providing device using a coupon according to Claim 1, further comprising a gift providing unit that provides the coupon user with a gift according to ranking,
wherein the control unit determines ranking according to superiority and inferiority of the numerals, and provides a gift corresponding to the ranking through the gift providing unit.

3. The variable content providing device using a coupon according to Claim 2, wherein the gift providing unit is a printing device that prints one of a discount ticket, an advance ticket, and a tasting ticket about an arbitrary prize corresponding to the ranking.

4. The variable content providing device using a coupon according to Claim 2, wherein the gift providing unit is a prize discharge device that discharges an arbitrary prize prepared in advance according to the ranking.

5. The variable content providing device using a coupon according to Claim 4, wherein the prize is one of a discount ticket, an advance ticket, a tasting ticket, and an object.

6. The variable content providing device using a coupon according to Claim 1, wherein the instant coupon number acquiring means is a coupon scanning unit that scans a coupon, and scans and outputs an instant coupon number printed on the coupon.

7. The variable content providing device using a coupon according to Claim 1, wherein the instant coupon number acquiring means is a key input unit that includes text keys including a plurality of number keys capable of inputting an instant coupon number, and receives an instant coupon number by pressing the number keys corresponding to the instant coupon number in cooperation with the display unit.

8. The variable content providing device using a coupon according to Claim 1, wherein the superiority and inferiority processing unit determines whether, as for a subject number, there is a coinciding number in numbers of the winning number, and determines numbers of supporting numbers as entire superiority when the subject number coincides with one number of numbers of the winning number.

9. The variable content providing device using a coupon according to Claim 1, wherein the superiority and inferiority processing unit determines that, as for a subject number, there is no coinciding number in the winning number, a subject number is superior with respect to a number coinciding with numbers of the winning number in the supporting numbers, and the supporting number which is not a number of the winning number is inferior.

10. A variable content providing method using a coupon comprising:
an instant coupon number acquiring process of acquiring, by instant coupon number acquiring means of a control unit, an instant coupon number from a coupon;
a coupon number acquiring process of, acquiring, by coupon number acquiring means of the control unit, a coupon number from the instant coupon number;
a winning number acquiring process of acquiring, by winning number acquiring means of the control unit, a winning number;
a content configuring process of determining, by content configuring means of the control unit, superiority and inferiority among numerals of the coupon number on the basis of the winning number, and coupling sub-contents corresponding to the superiority and inferiority and a cipher coincidence degree, configure a content;
a content display process of displaying, by the control unit, the configured content;
wherein the content configuring process includes
a subject detecting step of receiving, by a subject detecting unit, a coupon number detected through the coupon number acquiring means, and detecting one of numbers of the coupon number, as a subject number,
a superiority and inferiority processing step of receiving, by a superiority and inferiority processing unit, a winning number acquired through the winning number acquiring means, determining superiority and inferiority among supporting numbers except for the subject number in the subject number and the coupon number on the basis of the winning number, outputting superiority and inferiority information between the subject number and the supporting numbers, and outputting an entire superiority signal when the subject number is superior to all the supporting numbers,
an entire coincidence determining step of receiving, by an entire coincidence determining unit, a winning number from the winning number acquiring means when the entire superiority signal is input, receiving a coupon number from the coupon number acquiring means, performing entire coincidence determination of checking whether numerals constituting the winning number are the same as numerals constituting the coupon number and determining whether ciphers thereof are the same, outputting an entire coincidence signal in case of entire coincidence, and outputting a numeral coincidence signal when the ciphers do not coincide and only the numerals are the same, and
a content configuring step of coupling, by a content configuring unit, sub-contents corresponding to the numeral coincidence signal and the entire coincidence signal input from the entire coincidence determining unit and the entire superiority signal and superiority and inferiority input from the superiority and inferiority processing unit, and configuring a content.

11. The variable content providing method using a coupon according to Claim 10, wherein the instant coupon number acquiring process includes
a coupon insertion determining step of checking whether a coupon is inserted through a coupon scanning unit; and
an instant coupon number detecting step of scanning the inserted coupon and detecting an instant coupon number when it is determined that the coupon is inserted.

12. The variable content providing method using a coupon according to Claim 10, further comprising a gift providing process of determining ranking corresponding to the superiority and inferiority and a cipher coincidence degree, and providing a gift corresponding to the determined ranking to a coupon user using the coupon.

13. The variable content providing method using a coupon according to Claim 10, wherein in the superiority and inferiority processing step, the superiority and inferiority processing unit determines whether, as for a subject number, there is a coinciding number in numbers of the winning number, and determines numbers of supporting numbers as entire superiority when the subject number coincides with one number of numbers of the winning number.

14. The variable content providing method using a coupon according to Claim 10, wherein in the superiority and inferiority processing step, the superiority and inferiority processing unit determines that, as for a subject number, there is no coinciding number in the winning number, a subject number is superior with respect to a number coinciding with numbers of the winning number in the supporting numbers, and the supporting number which is not a number of the winning number is inferior.
